Europäisches Patentamt

European Patent Office

Office européen des brevets

(19)

(11) Publication number: **0 046 412**
**B1**

(12) **EUROPEAN PATENT SPECIFICATION**

(45) Date of publication of patent specification: **07.11.84**

(51) Int. Cl.³: **G 11 B 7/24, B 41 M 5/24**

(21) Application number: **81303786.8**

(22) Date of filing: **19.08.81**

(54) **Recording member.**

(30) Priority: **20.08.80 JP 113509/80**

(43) Date of publication of application:
**24.02.82 Bulletin 82/08**

(45) Publication of the grant of the patent:
**07.11.84 Bulletin 84/45**

(84) Designated Contracting States:
**DE GB NL**

(56) References cited:
**FR-A-2 318 481**
**FR-A-2 420 188**
**GB-A-2 007 860**
**GB-A-2 021 798**
**GB-A-2 034 957**

(73) Proprietor: **Hitachi, Ltd.**
**5-1, Marunouchi 1-chome**
**Chiyoda-ku Tokyo 100 (JP)**

(72) Inventor: **Terao, Motoyasu**
**2196-383 Hirai Hinodemachi**
**Nishitama-gun Tokyo (JP)**
Inventor: **Horigome, Shinkichi**
**7-52-13 Sunagawa-cho**
**Tachikawa-shi Tokyo (JP)**
Inventor: **Mitsuya, Munehisa**
**2-32-C206 Koyasu-cho**
**Hachioji-shi Tokyo (JP)**
Inventor: **Ota, Sakae**
**2142 Kamikur ata-cho Totsuka-ku**
**Yakohama-shi Kanagawa-ken (JP)**

(74) Representative: **Paget, Hugh Charles Edward**
**et al**
**MEWBURN ELLIS & CO. 2/3 Cursitor Street**
**London EC4A 1BQ (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to a recording member for use in recording information, more particularly to a recording member having a film which is deformed or locally removed upon irradiation with energy beams in order to form a concave or hole portion.

In the field of optical video discs or digital optical discs, there has been attempted the development of a recording member which gives a high signal-to-noise ratio and a small error rate even if image information of very high density is recorded. For example, films of bismuth (Bi) or tellurium (Te) and a chalcogenide glass film of the arsenic-tellurium type have been tried as recording layers on a disc substrate. In the case of an optical video disc, a reproduced signal of the highest quality can be obtained when a film of the As-Te type is used, but for a digital optical disc, good characteristics can also be obtained even when a film of Bi or Te is used. Such films can absorb laser beams more easily than films of metal such as Al, and have a low melting point (softening point), a low boiling point and a low heat conductivity, and, therefore, a very high recording sensitivity.

These recording films are disclosed in, for example, Japanese Patent Publication No. 40479/1971 and Japanese Laid-Open Patent Applications Nos. 87304/1975, 42489/1975 and 51733/1975. One of the present inventors has disclosed a recording film of the As-Te-Se type in U.S. Patent No. 4,238,803.

Since, As, Te and Bi are oxidized if they are allowed to stand in air for a long time, they are not stable over a long period. Furthermore, vacuum deposition of As alone cannot be performed stably, and it has been found that when an As-Te type material is subjected to vacuum deposition, the composition of the product changes with the lapse of time and good reproducibility can hardly be obtained.

It is a primary object of the present invention to provide a recording member which can be stable and can be made with good reproducibility.

The invention is set out in the claims.

Since Se is an element which is hardly oxidized, oxidation or other change of Te in the interior of the recording layer of the member of the invention can be prevented even if oxygen or water tends to intrude somewhat from the outer surface of the recording layer (i.e. surface remote from the substrate) or from the interface between the recording layer and the substrate. Accordingly it is possible that, even after the recording member has been used for several years recording and reading can be performed under the same conditions as when the recording member was first used.

Te is especially suitable as the main component because it does not form a high-melting-point compound with Se.

Better prevention of change with the lapse of time is generally obtained when a portion of higher Se content is formed in the vicinity of the outer surface of the recording layer, than when such a portion is formed in the vicinity of the interface between the recording layer and the substrate. However, even if a high Se content portion is formed only in the vicinity of the said interface, the intended effect can be attained. The maximum effect can be obtained when high Se content portions are formed both in the vicinity of the outer surface and in the vicinity of the said interface.

The average Se content in the recording layer of the present invention is preferably in the range of from 0.5 atomic % to 30 atomic %, more preferably in the range of from 10 atomic % to 20 atomic %. The thickness of the high Se content portion is 1 to 5 nm on either substrate side or the outer surface side and one or two high Se content portions may be formed. The Se content in the or each high Se content portion is not particularly critical but it must be higher than the average Se content in the other portion or portions. Usually it is preferable that the Se content in the high Se content portion is in the range 50 to 100 atomic %.

The Se content in the portion or portions other than the high Se content portion or portions is preferably more than 0 atomic % but less than 29.8 atomic %. In other words, even when Se is not present in these other portions, stability can be improved by the presence of Se in the recording layer.

It is preferred that the variation of the composition in the thickness direction of the layer be smooth.

Stability in the recording layer can be im-provided by addition of other elements, though the formation of the film may be relatively difficult in such a case. This result can be expected on addition of at least one of Si, Ge, As, Tl, Sn, Pb, In, Sb and Ta. It is preferred that the total content of these additive elements is not more than 30 atomic %. If the intended effect is manifested at an additive element content of up to 5 atomic %, it is preferred that this content is in the range 1 to 5 atomic %.

It is preferred that the thickness of the recording layer is in the range 20 to 100 nm, more preferably 25 to 60 nm. When a protective film is formed on the surface of the recording layer (as described below), the thickness of the recording layer may be in the range 5 to 100 nm, the total thickness of the recording layer and the protective film thus being greater than 5 nm.

While the or each high Se content portion is in the vicinity of either the outer surface of the recording layer or the interface between the recording layer and the substrate it need not be located at the outer surface or the interface, but may be at a position slightly inwards from the surface or interface. In this case, it is preferred that the centre of the high Se content portion is located not more than 10 nm from the outer surface or not more than 15 nm from the said interface.

Embodiments of the invention will now be described by way of example with reference to the accompanying drawings in which:—

Fig. 1 shows a vacuum deposition apparatus suitable for forming the recording layer of a recording member of the present invention.

Fig. 2 is a graph illustrating the variation of composition in the thickness direction in one embodiment of the recording layer of the present invention.

Fig. 3 is a diagrammatic view of one example of recording and reproducing apparatus in which a recording member of the present invention is used.

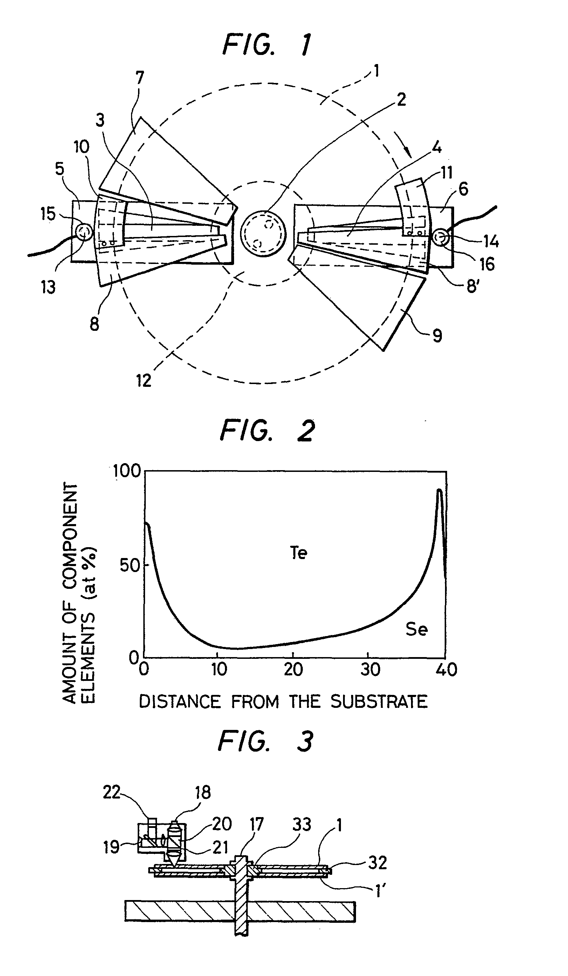

As shown in Fig. 1 there is used a substrate 1 comprising an annular disc of chemically reinforced glass having a thickness of about 1 mm, an outer diameter of 300 mm and an inner diameter of 35 mm. A replica of a tracking groove having a thickness of about 20 $\mu$m is formed on the reinforced glass from an ultraviolet ray hardening resin. The substrate is attached to a rotary shaft 2 in a vacuum deposition apparatus and is rotated at 120 rpm. To allow illustration of the structure below the substrate, the substrate is indicated in the drawing by a broken line.

Two vacuum deposition boats 3 and 4 are arranged with centres below the portion of the disc substrate on which information is to be recorded, so that they are located at a common level below the disc substrate. Masks 5 and 6 which have outwardly flaring fan-shaped with the center of rotation of the disc as the center of the fan, are disposed above the boats 3, 4. General shutters 7 and 9 capable of entirely covering the slits are disposed above the masks. The shutters co-operate to open or close the slits simultaneously.

Angle shutters 8 and 8' are disposed above the shutters 7, 9 and can be moved through a preset angle at a predetermined speed. Vanes 10 and 11 are attached to the angle shutters to prevent reduction of the bonding force in the subsequent bonding by adhesion of a vacuum deposited film to the outermost periphery of the disc. Vacuum deposition is prevented at the inner circumference of the disc by a metal disc 12 (indicated by a broken line) attached just below the disc.

Te is charged into one of the two boats 3, 4 and Se is charged into the other. The boats are made of tantalum. In order to prevent adhesion of drops or small amounts of the starting material to the substrate, the boat structure is such that the source to be vacuum deposited cannot directly be seen from the portion of the disc substrate onto which vacuum deposition is to be effected. An electric current is caused to flow through the boats while the disc is being rotated, and the materials in the boats are evaporated. The amounts of the materials evaporated are determined from the deposition of the evaporated materials on quartz crystal oscillator type film thickness monitors 15 and 16 through holes 13 and 14 formed through the masks 5 and 6. The deposition speeds are calculated from the amounts deposited on the quartz crystals and the electric currents to be supplied to the boats are controlled so that constant deposition speeds can be obtained. The ratio of the speeds of deposition on the disc from the respective boats is determined by the opening angles of the angle shutters.

After the general shutters are opened, the angle shutters are controlled and a recording layer having a thickness of 40 nm and a composition gradient as shown in Fig. 2 is formed by vacuum deposition. Then, the general shutters are closed to complete the vacuum deposition.

Fig. 2 shows that, at both the outer side and at the substrate side, the recording layer has regions (which are each less than 5 nm thick) of high Se content. These regions are separated by a central region of low average Se content. At the outer surface, the position of maximum Se content is slightly spaced from the outer surface itself.

The disc substrate 1 having the recording layer thus formed thereon by vacuum deposition is then bonded to another chemically reinforced glass disc 1' with inner and outer spacers 32, 33 between the discs, as shown in Fig. 3. The substrate 1 is arranged so that the recording layer is on its inner side where there is a sealed space. For test purposes this sealing is not completely accomplished but the recording layer is brought into contact with exterior air, so that the test time may be shortened. Each spacer 32, 33 is of aluminum. Even if bonding is completely accomplished water in the air gradually intrudes into the disc via the bonding adhesive layer.

To record on this recording member, as shown in Fig. 3, the recording member is attached to the recording device and is rotated by a shaft 17 at a rotation number of 240 min$^{-1}$. A semiconductor laser 18 having a beam wavelength of 830 nm and an output power of 15 mW is used as the recording light source. While the groove is tracked by signals from a tracking detector 19, laser beams modulated by digital signals are concentrated at a pulse width of 100 ns on the recording layer through the substrate by a polarizing prism 20 in a read-out head, a 1/4 wavelength plate 21 and a lens. Automatic focussing is performed by signals from a detector 22. A hole having a diameter of about 0.8 $\mu$m is formed at the laser beam irradiated area.

Reading of the recorded information is carried out in the following manner. The disc is rotated at a rotation number of 240 min$^{-1}$ and the same semiconductor laser beams as used for recording with the output power reduced to 5 mW are applied to the recording layer. The variation of the intensity of the reflected rays is detected by the detector 22 for the automatic focussing to obtain reproduced signals. The error rate at the reading step is about $4 \times 10^{-6}$.

Various changes were made in different samples of this embodiment, giving the results now described.

When the thickness of the high Se content portion is made greater than 5 nm, a change is caused in the film structure within about 1 month. When this thickness is reduced below 1 nm, in the accelerated life test conducted at room temperature (25°C) and a relative humidity of 95% the percent transmission of beams of the semiconductor laser having the above-mentioned wavelength exceeds 30% in about 1.5 months, the recording sensitivity thus being degraded.

If the Se content is changed by a constant amount of the whole thickness, while the pattern of variation of the Se content in the thickness direction is maintained (i.e. the curve of Fig. 2 is moved up or down—in this operation if the calculated Se content exceeds 100%, the actual content is regarded as being 100% and if the calculated peak of the Se content is lower than 50%, it is supposed that the Se content is 50% in a region of 1 nm thickness before and after the peak) then (a) if the average Se content is lower than 0.5 atomic %, the percent transmission of the semiconductor laser beams exceeds 30% within 1 week in the atmosphere having a temperature of 25°C and a relative humidity of 95%, and (b) if the average Se content exceeds 30 atomic %, the film structure is changed within about 1 month from the point of formation of the recording layer and black points and wrinkles appear on the film surface. When the average Se content is in the range of from 10 to 20 atomic %, a high and stable recording sensitivity can be achieved.

When the thickness of the recording layer is changed, it is found that, if this thickness is less than 20 nm, the shape of the holes is disordered and, if the thickness exceeds 100 nm, adjacent holes interfere with each other and the error rate becomes higher than $10^{-4}$. If the thickness of the recording layer is greater than 25 nm, the stability of the shape of holes is increased and if the entire thickness is within a range of 25 to 60 nm, the error rate is lower than $10^{-5}$.

When the distance of the center of the high Se content portion at the outer surface side of the recording layer is varied, if this distance exceeds 10 nm sensitivity is reduced by more than 20% in an atmosphere having a temperature of 25°C and a relative humidity of 95% within about 1 week because of oxidation of the film surface. When the distance of the center of the high Se content portion on the substrate side from the interface between the substrate and the recording layer is changed, if this distance exceeds 15 nm sensitivity is reduced by more than 20% in an atmosphere having a temperature of 25°C and a relative humidity of 95% within about 3 weeks.

It is preferred that the recording layer is formed by vacuum deposition but deposition is a gas or sputtering may be used.

If a protective film is formed directly on the recording member of the present invention, recording sensitivity is reduced but reduction of the speed of change with the lapse of time can be achieved. A suitable inorganic or organic substance may be used for the protective film. To minimize reduction of sensitivity, it is preferred that an organic substance having a low melting point (low softening point) is used. For example, there may be used a vacuum deposition film of a paraffinic hydrocarbon or a coating film of a ketone resin. Alternatively, a film composed mainly of at least one of Te, Se and S may be used.

When an appropriate additive element is incorporated in the recording layer, the SN ratio is improved on recording of video signals, and other advantages such as improvement of the heat resistance can also be attained. The additive may be one or more of Si, Ge, As, Tl, Sn, Pb, In, Sb and Ta. For example if 4% of Te is substituted by As or 5% of Te is substituted by Pb by incorporating such an element into the Te evaporation source, the SN ratio in the reproduced signal can be improved. In the case of Pb, since Pb can be evaporated singly from a different evaporation source and can be vacuum deposited simultaneously with Te and Se, precise control of the composition can be acomplished very easily.

To summarize, with the recording member of the present invention, high sensitivity and high stability can be obtained, and the recording layer film can be formed very easily with good reproducibility.

**Claims**

1. A recording member for use in recording information, which comprises a substrate and a recording layer consisting principally of Te formed on the substrate, which layer is in use deformed or locally removed by irradiation, characterised in that said recording layer contains Se as oxidation inhibitor, the Se content having a peak at a portion having a thickness in the range 1 to 5 nm in the vicinity of the surface of the recording layer remote from the substrate and/or at a portion having a thickness in the range 1 to 5 nm in the vicinity of the interface between the recording layer and the substrate.

2. A recording member according to claim 1 wherein in the or each said peak Se content portion, the selenium content is in the range 50 to 100 atomic %.

3. A recording member according to claim 1 or claim 2 wherein there is a said peak Se content portion only in the vicinity of the surface of the recording layer remote from the substrate.

4. A recording member according to claim 1 or claim 2 wherein there is a said peak Se content portion only in the vicinity of the interface between the layer and the substrate.

5. A recording member according to any one of claims 1 to 3 wherein the said peak Se content portion in the vicinity of the surface remote from the substrate, if present, has its centre not more than 10 nm from that surface.

6. A recording member according to any one of claims 1, 2 and 4 wherein the said peak Se content portion in the vicinity of the interface between the substrate and the recording layer, if present, has its centre not more than 15 nm from said interface.

7. A recording member according to any one of claims 1 to 4 wherein the said peak Se content portion is located at the said surface remote from the interface or at the said interface, as the caser may be.

8. A recording member according to any one of the preceding claims wherein the average Se content in the recording layer is 0.5 to 30 atomic %.

9. A recording member according to any one of the preceding claims wherein the thickness of the recording layer is in the range 5 to 100 nm.

10. A recording member according to any one of the preceding claims wherein the recording layer contains up to 30 atomic % in total of one or more additive element selected from Si, Ge, As, Tl, Sn, Pb, In, Sb and Ta.

11. A recording member according to claim 10 wherein the recording layer contains up to 30 atomic % of lead as said additive element.

12. A recording member according to claim 10 or claim 11 wherein the content of said additive element is in the range 1 to 5 atomic %.

## Patentansprüche

1. Aufzeichnungselement zur Verwendung bei der Aufzeichnung von Information, das ein Substrat und eine hauptsächlich aus auf dem Substrat ausgebildetem Te bestehende Aufziechnungsschift aufweist, die bei der Anwendung durch Bestrahlung deformiert oder lokal abgelöst wird, dadurch gekennzeichnet, daß diese Aufzeichnungsschicht Se als Oxidationsinhibitor enthält, wobei der Se-Gehalt einen Höchstwert in einem Bereich mit einer Dicke zwischen 1 und 5 nm nahe der vom Substrat abgelegenen Oberfläche der Aufzeichnungsschicht und/oder in einem Bereich mit einer Dicke zwischen 1 und 5 nm nahe der Grenzfläche zwischen der Aufzeichnungsschicht und dem Substrat aufweist.

2. Aufzeichnungselement nach Anspruch 1, wobei in dem oder in jedem Bereich mit dem Se-Höchstgehalt der Selen-Gehalt zwischen 50 und 100 Atom-% liegt.

3. Aufzeichnungselement nach Anspruch 1 oder Anspruch 2, wobei ein Bereich mit dem Se-Höchstgehalt nur nahe der vom Substrat abgelegenen Oberfläche der Aufzeichnungsschicht vorliegt.

4. Aufzeichnungselement nach Anspruch 1 oder Anspruch 2, wobei ein Bereich mit dem Se-Höchstgehalt nur nahe der Grenzfläche zwischen der Schicht und dem Substrat vorliegt.

5. Aufzeichnungselement nach einem der Ansprüche 1 bis 3, wobei der Bereich mit dem Se-Höchstgehalt nahe der vom Substrat abgelegenen Oberfläche, falls vorhanden, sein Zentrum nicht mehr als 10 nm von dieser Oberfläche entfernt hat.

6. Aufzeichnungselement nach einem der Ansprüche 1, 2 und 4, wobei der Bereich mit dem Se-Höchstgehalt nahe der Grenzfläche zwischen dem Substrat und der Aufzeichnungsschicht, falls vorhanden, sein Zentrum nicht mehr als 15 nm von dieser Grenzfläche entfernt hat.

7. Aufzeichnungselement nach einem der Ansprüche 1 bis 4, wobei der Bereich mit dem Se-Höchstgehalt je nach Sachlage an der von der Grenzfläche abgelegenen Oberfläche oder an der Grenzfläche liegt.

8. Aufzeichnungselement nach einem der vorhergehenden Ansprüche, wobei der durchschnittliche Se-Gehalt in der Aufzeichnungsschicht 0,5 bis 30 Atom-% beträgt.

9. Aufzeichnungselement nach einem der vorhergehenden Ansprüche, wobei die Dicke der Aufzeichnungsschicht im Bereich von 5 bis 100 nm liegt.

10. Aufzeichnungselement nach einem der vorhergehenden Ansprüche, wobei die Aufzeichnungsschicht insgesamt bis zu 30 Atom-% von einem oder mehreren aus Si, Ge, As, Tl, Sn, Pb, In, Sb und Ta gewählten Zuzatzelementen enthält.

11. Aufzeichnungselement nach Anspruch 10, wobei die Aufzeichnungsschicht bis zu 30 Atom-% Blei als das Zusatzelement enthält.

12. Aufzeichnungselement nach Anspruch 10 oder Anspruch 11, wobei der Gehalt des Zusatzelements im Bereich von 1 bis 5 Atom-% liegt.

## Revendications

1. Milieu d'enregistrement à utiliser pour enregistrer l'information, qui comprend un substrat et une couche d'enregistrement consistant principalement en Te formée sur le substrat, laquelle couche est, en utilisation, déformée ou localement retirée par irradiation, caractérisé en ce que ladite couche d'enregistrement contient Se comme inhibiteur de l'oxydation, la teneur en Se ayant une valeur maximum en une partie ayant une épaisseur comprise entre 1 et 5 nm à proximité de la surface de la couche d'enregistrement qui est éloignée deu substrat et/ou en une partie ayant une épaisseur comprise entre 1 et 5 nm à proximité de l'interface entre la couche d'enregistrement et le substrat.

2. Milieu d'enregistrement selon la revendication 1, où dans la ou chaque partie à teneur maximum en Se, la teneur en sélénium est comprise entre 50 et 100% atomique.

3. Milieu d'enregistrement selon la revendication 1 ou la revendication 2, où ladite partie à teneur maximum en Se ne se trouve qu'à proximité de la surface de la couche d'enregistrement qui est éloignée du substrat.

4. Milieu d'enregistrement selon la revendication 1 ou la revendication 2, où la partie à teneur maximum en Se ne se trouve qu'à proximité de l'interface entre la couche et le substrat.

5. Milieu d'enregistrement selon l'une quelconque des revendications 1 à 3, où la partie à teneur maximum en Se à proximité de la surface qui est éloignée du substrat, si elle est présente, a son centre qui n'est pas à plus de 10 nm de cette surface.

6. Milieu d'enregistrement selon l'un quelconque des revendications 1, 2 et 4, où la partie à teneur maximum en Se à proximité de l'interface entre le substrat et la couche d'enregistrement, si elle est présente, a son centre qui n'est pas à plus de 15 nm de ladite interface.

7. Milieu d'enregistrement selon l'une quelconque des revendication 1 à 4, où la partie à teneur maximum en Se trouve sur ladite surface qui est éloignée de l'interface ou sur ladite interface, selon le cas.

8. Milieu d'enregistrement selon l'une quelconque des revendications précédentes, où la teneur moyenne en Se dans la couche d'enregistrement est de 0,5 à 30% atomique.

9. Milieu d'enregistrement selon l'une quelconque des revendications précédentes, où l'épaisseur de la couche d'enregistrement est comprise entre 5 et 100 nm.

10. Milieu d'enregistrement selon l'une quelconque des revendications précédentes, où la couche d'enregistrement contient jusqu'à 30% atomique, au total, d'un ou plusieurs éléments additifs choisis parmi Si, Ge, As, Tl, Sn, Pb, In, Sb et Ta.

11. Milieu d'enregistrement selon la revendication 10, où la couche d'enregistrement contient jusqu'à 30% atomique de plomb en tant qu'élément additif.

12. Milieu d'enregistrement selon la revendication 10 ou la revendication 11, où la teneur de l'élément additif est comprise entre 1 et 5% atomique.

## FIG. 1

## FIG. 2

AMOUNT OF COMPONENT ELEMENTS (at %)

DISTANCE FROM THE SUBSTRATE

## FIG. 3